# EUROPEAN PATENT APPLICATION

(11) **EP 0 838 580 A1**
(43) Date of publication of application: **29.04.1998**
(21) Application number: 97307738.1
(22) Date of filing: 01.10.1997
(51) Int. Cl.: F01P 7/16, F16K 31/02, G05D 23/13, G05D 23/30

(54) **An electrically heated thermostatic valve**

(30) Priority: 02.10.1996 GB 9620499
(71) Applicant: Adwest Western Thomson Ltd., Reading, Berkshire RG5 4SN (GB)
(72) Inventor: Breeden, Anthony P., Wokingham, Berkshire RG41 3UJ (GB); Jackson, Kevin David, Leek, Staffordshire ST13 7LQ (GB); Ryan, David J., Reading, Berkshire RG4 5UG (GB)
(74) Representative: Dealtry, Brian

(57) **Abstract**

An electrically heated thermostatic valve (10) comprising a valve housing (12) defining a fluid passageway (14), valve means (16) located within the passageway for controlling flow of fluid therealong, a thermostatic actuation means (18) located within the passageway which is responsive to temperature changes in the fluid for controlling the valve means, the actuation means including a piston (20) axially movably housed in a piston cylinder casing (22), the cylinder casing containing a heat expandable material for causing relative axial movement between the piston and cylinder casing, the piston being statically connected to the valve housing so that said relative axial movement causes the casing to move relative to the valve housing, the cylinder casing being connected to the valve means such that movement of the cylinder casing causes operation of the valve means, an electrically powered heating means located within the cylinder casing and electric supply wires (55) for supplying electrical power to the heating means, the supply wires extending between the casing and the valve housing in a flexible manner so as to be able to accommodate movement of the cylinder casing relative to the valve housing, the supply wires being electrically insulated from said fluid and being sealingly connected to the casing and to the valve housing.

## Description

The present invention relates to an electrically heated thermostatic valve for a coolant circuit of an internal combustion engine.

According to one aspect of the present invention there is provided an electrically heated thermostatic valve comprising a valve housing defining a fluid passageway, valve means located Within the passageway for controlling flow of fluid therealong, a thermostatic actuation means located within the passageway which is responsive to temperature changes in the fluid for controlling the valve means, the actuation means including a piston axially movably housed in a piston cylinder casing, the cylinder casing containing a heat expandable material for causing relative axial movement between the piston and cylinder casing, the piston being statically connected to the valve housing so that said relative axial movement causes the casing to move relative to the valve housing, the cylinder casing being connected to the valve means such that movement of the cylinder casing causes operation of the valve means, an electrically powered heating means located within the cylinder casing and electric supply wires for supplying electrical power to the heating means, the supply wires extending between the casing and the valve housing in a flexible manner so as to be able to accommodate movement of the cylinder casing relative to the valve housing, the supply wires being electrically insulated from said fluid and being sealingly connected to the casing and to the valve housing.

Preferably the wires are sheathed in a common sheath formed of a flexible, heat resistant material.

In one embodiment the wire extends from the heating means through the casing and to the valve housing in a continuous manner, the sheath being sealingly attached to the casing and housing.

In an alternative embodiment, the length of wire extending between the casing and housing may be electrically connected at one or both ends to wires located internally of the casing and/or housing via an electrical connector, for example a plug and socket connector.

Various aspects of the present invention are hereinafter described, with reference to the accompanying drawings, in which:-
Figure 1 is a part sectional view through a valve according to one embodiment of the invention;
Figure 2 is a more detailed part axial sectional view of the valve shown in Figure 1;
Figure 3 is a similar view to Figure 2 of an alternative embodiment according to the present invention.
Figure 4 is a similar view to Figure 2 of a further alternative embodiment according to the present invention;
Figure 5 is a similar view to Figure 1 showing the embodiment of Figure 4 in situ;
Figure 6 is a broken away part perspective view of the embodiment shown in Figure 5; and
Figure 7 is a similar view to Figure 2 of a further alternative embodiment according to the present invention.

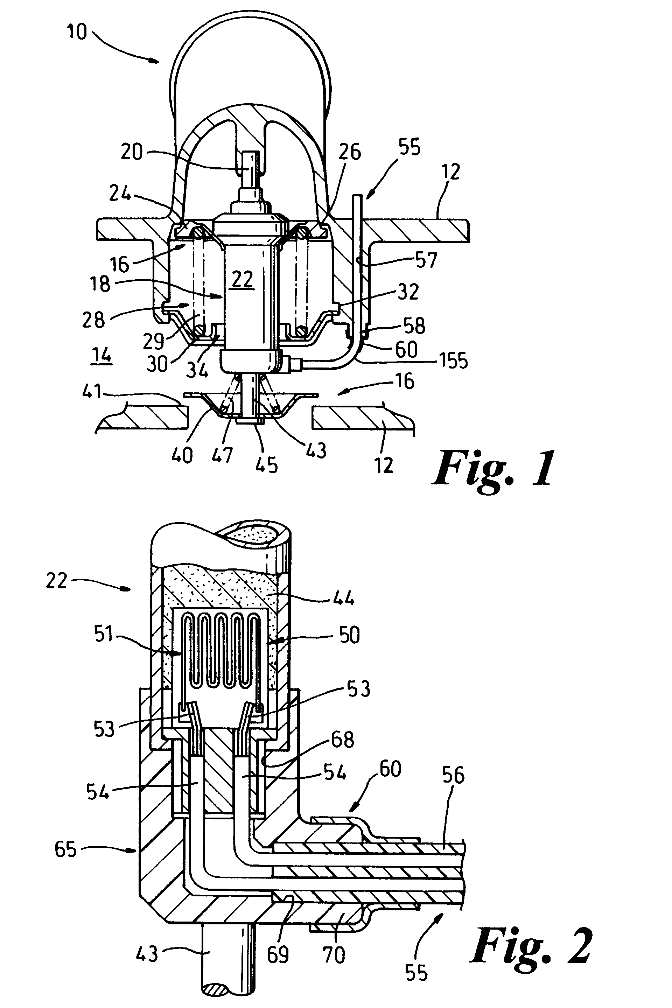

Referring initially to Figure 1 there is shown a valve 10 including a valve housing 12.

The housing 12 defines a fluid passageway 14 in which is housed valve means 16 for controlling fluid flow along the passageway 14 and actuation means 18 for controlling operation of the valve means 16.

The actuation means 18 include a piston 20 which is axially movably located in a cylinder casing 22. One end of the piston 20 is fixedly attached to the housing 12 such that it is held static during relative axial movement between the casing 22 and piston 20. Accordingly during such relative movement, the casing 22 moves relative to the housing 12.

A main valve element 24 is mounted on the casing 22 and cooperates with a valve seat 26 formed in the housing 12. The valve element 24 is biased into contact with the seat 26 by resilient means 28 preferably in the form of a coiled compression spring 29. One end of spring 29 abuts the valve element 24 and the other end abuts a mounting plate 30 which is located within an annular groove 32 formed in the housing 12.

The plate 30 contains a central opening 34 through which casing 22 projects, the opening 34 being of larger diameter than the casing 22 to thereby define an annular passageway for fluid flow.

Preferably a bi-pass valve element 40 is mounted on the casing 22, the element 40 co-operating with a valve seat 41 formed in the housing 12. The element 40 is slidably mounted on a shaft 43 and is normally held in abutment with the enlarged head 45 of shaft 43 by resilient means, preferably in the form of a coiled spring 47.

As shown in Figure 1, when the valve element 24 is seated on seat 26, valve element 40 is spaced from seat 41.

The casing 22 is formed from a heat conductive material, such as metal, and contains a heat expandable material 44 such as a suitable wax which on expansion displaces the piston 20 axially out of the casing 22.

Accordingly such relative movement between the piston and casing 22 causes the casing 22 to move downwardly (Figure 1) and so move valve element 24 away from seat 26 and valve element 40 toward seat 41.

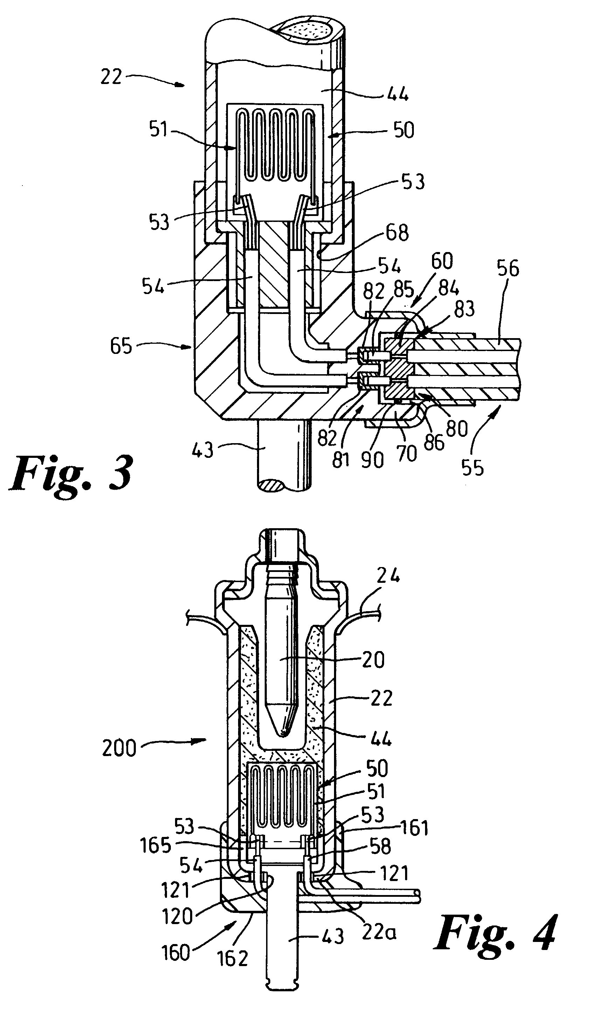

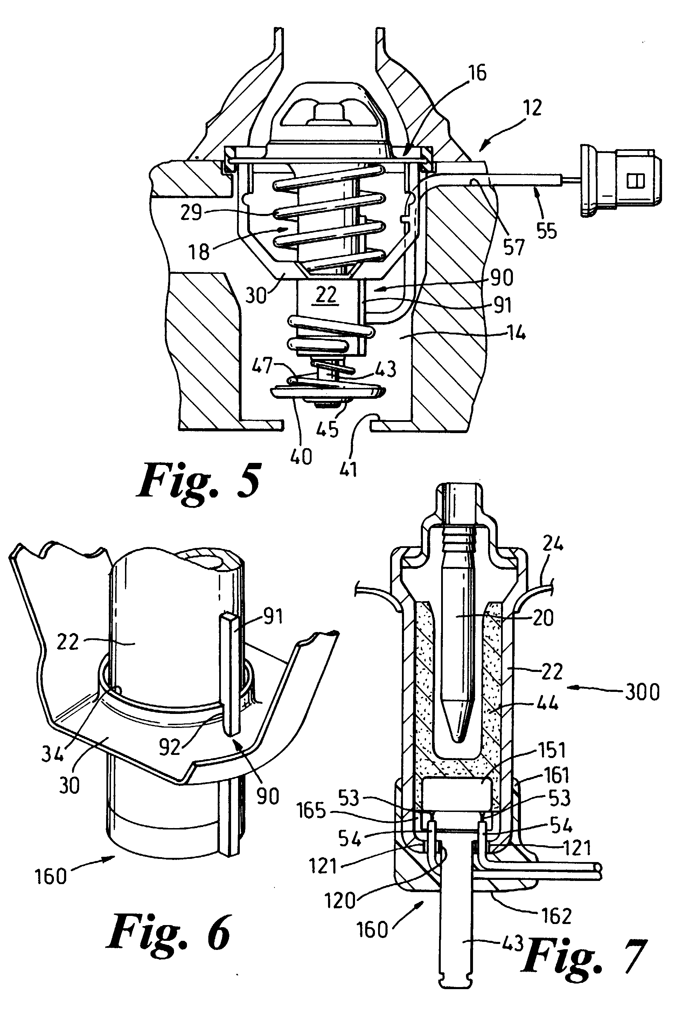

An electrically powered heating means 50 is located internally of the casing 22. In the embodiments of Figures 2,3 and 4 the heating means 50 is a ceramic heating element 51 in the form of a printed wafer or plate. In the embodiment of Figure 7, the heating means 50 is a ceramic thermistor 151 formed from a ceramic powder which is compressed to form a pill-like body. The element 151 is preferably formed so as to have a positive temperature co-efficient electrical resistance.

Electric power is supplied to the heating means 50 via electric wires 53. The wires 53 preferably form part of a double insulated cable assembly 55, viz each wire 53 is contained within an individual flexible sheath 54 and both sheathed wires 53 are contained within a common sheath 56.

As seen in Figure 1, the cable assembly 55 extends through a bore 57 formed in the housing 12 and extends to the exterior of the housing 12 to be connected to a power source (not shown).

At the internal entrance to bore 57, the wall of housing 12 is preferably provided with a projection 58. A sealing sleeve 60 formed from a heat shrinkable material is heat shrunk onto the exterior of the projection 58 and the exterior of the cable assembly 55 adjacent thereto in order to provide a fluid seal between the housing 12 and cable assembly. In order to facilitate sealing the external cross-sectional shape of the common sheath 56 and that of projection 58 are preferably circular.

The cable assembly 55 is fed to the casing 22 via a cap housing 65 which is preferably moulded from a suitable plastics material.

The housing 65 includes a shouldered bore 68 which defines a seat for an axial end of casing 22, the casing 22 being sealingly and fixedly located in bore 68 by means of a bonding, for example by a means of a suitable adhesive or welding.

The wires 54 are fed along bore 68 and extend through a radially directed bore 69. As shown, bore 69 preferably extends through a radially directed projection 70 formed on housing 65.

The sheath 56 extends into the bore 69 and a further sealing sleeve 60 formed from a heat shrinkable material is heat shrunk onto the exterior of projection 70 and the exterior of sheath 56 adjacent thereto to provide a fluid seal between housing 65 and the cable assembly.

Shaft 43 which supports the bi-pass valve element 40 is attached to housing 65.

Preferably the radially directed projection 70 is located slightly below the height of projection 58 and faces projection 58. In this way the cable assembly 55 assumes a generally L-shaped path which is relatively short but which is able to accommodate the movement of the casing 22 relative to housing 12 during use.

Preferably the sheath 56 is formed from a flexible inert plastics material which is stable when exposed to the coolant fluid in passageway 14. Polytetrafluoroethylene or ethylene tetra fluoroethylene are suitable plastics materials.

Preferably the sheath 56 and heat shrinkable sleeves are formed of the same material.

In the embodiment shown in Figures 1 and 2, the wires 53 extend in a continuous manner into casing 22 and housing 12 respectively.

It is envisaged that the length portion 155 located with the passageway 14 and extending between casing 22 and housing 12 may be electrically connected to wires located internally of the casing 22 and/or housing 12 by an electrical connector. This has the advantage of enabling the wires 53 located internally of the casing 22 and/or housing 12 to be moulded in situ and thereby provide a good sealing connection.

An example of a suitable electrical connection 80 is illustrated in Figure 3. Parts similar to those in Figure 2 have been designated by similar reference numerals.

The electrical connection 80 includes a socket 81 having female connector terminals 82 integrally moulded with projection 70. The electrical connection 80 further includes a plug 83 having male connector terminals 85 moulded integrally with plug body 84 which is formed from a suitable plastics.

The plug body 84 is preferably received within a bore 86 forming part of the socket 81.

Preferably a seal 90, such as an O-ring, is located between the plug body 84 and bore 86 to sealingly isolate the connected male and female terminals. Preferably a heat shrinkable sleeve 60 is also provided to create a sealing connection.

An alternative embodiment 200 is illustrated in Figures 4 to 6. Parts of embodiment 200 are similar to those in the embodiments of Figures 1 to 3 are designated by the same reference numerals.

In embodiment 200, an alternative construction is adopted for sealingly connecting the sheathed wires 53 to the casing 22.

In this respect casing 22 is provided with a bottom wall 22a having a central opening 120 through which shaft 43 passes and a pair of smaller openings 121 through which respective sheathed wires 53 pass.

A seal body 160 is provided which is moulded in situ after the heating element 51, sheathed wires 53 and shaft 43 have been correctly positioned within the casing 22.

The seal body 160 is preferably moulded from a plastics material which is capable of bonding or adhering to the wall of casing 22, shaft 43 and sheaths 54 after cooling and maintaining its bonded connection therewith when experiencing variations of temperature during use.

Preferably the plastics material is a hot melt adhesive, preferably of the type generically known as a 'micro-melt' adhesive.

Preferably the hot melt adhesive is also chemically resistive to coolant fluid which flows along passageway 14.

Preferably the seal body 160 is moulded so as to have a side wall portion 161 which extends axially along the lower portion of the casing 22 for a desired distance and is also moulded so as to have a bottom wall portion 162 which is preferably of sufficient thickness for the sheathed wires 53 to be embedded therein and guided in a generally radial direction as seen in Figure 4. The body 160 is therefore sealingly bonded to the external wall of the lower regions of the casing 22 and so prevents ingress of coolant fluid into the casing via openings 120,121.

Preferably the casing 22 is adapted to permit plastics material to enter the interior of the lower portion of the casing during moulding of body 160 such that body 160 includes an internal body portion 165 which is sealingly bonded to the lower internal walls of casing 22. The body portion 165 ensures that molten wax 44 does not directly apply pressure onto the outer portion of the seal body 160 and so reduces the risk of the bond between the body 160 and external wall of the casing being broken or weakened during use. The internal body portion 165 also serves to encapsulate the shaft 43 and lower region of heating element 51 and thus positively locate them within the casing 22.

Preferably casing 22 is adapted to permit plastics material to enter the interior of the casing 22 during moulding by forming openings 121 so as to be larger than the size of the sheathed wired 53 to thereby define a passageway through which molten plastics material may flow.

It will be appreciated that since body 160 is moulded in situ, manufacturing tolerances for the casing 22 are not critical. Accordingly, casing 22 is preferably formed by deep drawing techniques.

In the embodiment 300 shown in Figure 7, similar parts to those in the embodiment 200 are designated by the same reference numerals.

Embodiment 300 differs from embodiment 200 in that a different construction of heating element is provided. As indicated above, in embodiment 300 the heating element 151 is of pill-like form, i.e. its body extends in a generally planar manner from a central axis. The element 151 is arranged such that its planar extent extends generally perpendicular to the longitudinal axis of the casing 22.

Accordingly the axial extent of the heating element 151 is less than that of the heating element 51 and so the casing 22 in embodiment 300 may be shorter and the volume of wax 44 contained therein may be less than that of embodiment 200. This is advantageous in that reduction in axial length enables the embodiment 300 to be more easily fitted into existing coolant systems where available space is limited.

In addition, reduction in the volume of wax is advantageous since it reduces the maximum pressure generated by the wax during use. In this respect, reduction of maximum generated pressure is desirable in situations where the maximum generated pressure exceeds the pressure needed to extend the piston/casing to their maximum amount. Once the piston/casing have extended to their maximum amount, further pressures generated by the wax have to be accommodated internally of the casing and so reduction in this excess pressure is desirable to avoid failure of seals, in particular, between the casing and piston.

It will be appreciated that the casing 22 is free to rotate relative to the piston 20. Preferably, therefore, for all embodiments rotation restraint means 90 are provided.

Preferably the rotation restraint means 90 comprises an axially extending rib 91 secured to the casing 22 which slidably locates within a groove 92 formed within plate 30.

Preferably for embodiments 200 and 300 the rib 91 is moulded in situ from the plastics material from which body 160 is moulded at the time of moulding body 160.

## Claims

1. An electrically heated thermostatic valve comprising a valve housing defining a fluid passageway, valve means located within the passageway for controlling flow of fluid therealong, a thermostatic actuation means located within the passageway which is responsive to temperature changes in the fluid for controlling the valve means, the actuation means including a piston axially movably housed in a piston cylinder casing, the cylinder casing containing a heat expandable material for causing relative axial movement between the piston and cylinder casing, the piston being statically connected to the valve housing so that said relative axial movement causes the casing to move relative to the valve housing, the cylinder casing being connected to the valve means such that movement of the cylinder casing causes operation of the valve means, an electrically powered heating means located within the cylinder casing and electric supply wires for supplying electrical power to the heating means, the supply wires extending between the casing and the valve housing in a flexible manner so as to be able to accommodate movement of the cylinder casing relative to the valve housing, the supply wires being electrically insulated from said fluid and being sealingly connected to the casing and to the valve housing.

2. A valve according to claim 1 wherein the supply wires extend through openings within the casing, the wires being sealingly connected to the casing by a hot melt adhesive.

3. A valve according to claim 2 wherein said hot melt adhesive is moulded in situ to define a moulded body which sealingly encapsulates said wires and an adjacent external surrounding portion of said casing.

4. A valve according to claim 3 wherein said wires extend through openings formed in the casing, said hot melt adhesive moulded body extending through said openings and sealingly encapsulating an internal portion of said casing which is located adjacent to and surrounds said openings.

5. A valve according to claim 3 or 4 wherein said moulded body is provided with rotation restraint means which co-operate with a static portion of the valve means in order to testrain totation of the piston cylinder casing relative to the piston.

6. A valve according to claim 5 wherein said static portion of the valve means comprises a groove and said rotation restraint means compresses a rib which extends axially of the casing.

7. A valve according to any preceding claims wherein the heating means comprises a ceramic thermistor having a body of generally plate-like form.

8. A valve according to claim 7 wherein said ceramic body is located within a bottom region of the casing, the body being oriented such that the plane of the plate-like form is generally perpendicular to the axis of said cylinder casing.

9. A valve according to any of claims 2 to 8 wherein the piston cylinder casing is formed from a metal by deep drawing techniques.

10. A valve according to Claim 1 wherein the wires are sheathed in a common sheath formed of a flexible heat resistant material.

11. A valve according to Claim 10 wherein the wires extend from the heating means through the casing and to the valve housing in a continuous manner, the sheath being sealingly attached to the casing and housing.

12. A valve according to Claim 10 wherein the length of wire extending between the casing and housing is electrically connected at one or both ends to wires located internally of the casing and/or housing via an electrical connector.

13. A valve according to Claim 12 wherein the electrical connector is a plug and socket connector.

14. A valve according to any of claims 1, 10 to 13 wherein the wires are fed to the casing via an end cap housing, preferably moulded from a plastics material.

15. A valve according to Claim 14 wherein the cap housing includes a shouldered bore which defines a seat for an axial end of the casing.

16. A valve according to Claim 15 wherein the axial end of the casing is fixedly located in said shouldered bore by means of bonding.

17. A valve according to Claim 14, 15 or 16 wherein the valve means includes a by-pass valve attached to said cap housing.

18. A valve according to Claim 17 including a main valve mounted on said casing.
